# EUROPÄISCHE PATENTANMELDUNG

(11) **EP 4 194 279 A1**
(43) Veröffentlichungstag der Anmeldung: **14.06.2023**
(21) Anmeldenummer: 22212788.8
(22) Anmeldetag: 12.12.2022
(51) Int. Cl.: B60R 15/02, B60P 3/32, A47K 3/30, E06B 9/11

(54) **FREIZEITFAHRZEUG MIT EINEM RAUMTRENNER FÜR EINE SANITÄRZELLE**

(30) Priorität: 11.12.2021 DE 102021132768
(71) Anmelder: Hymer GmbH & Co. KG, 88339 Bad Waldsee (DE)
(72) Erfinder: Steigmiller, Anton, 88444 Ummendorf (DE); Schroll, Michael, 88353 Kißlegg (DE); Wiest, Hansi, 88339 Bad Waldsee (DE)
(74) Vertreter: Waller, Stefan

(57) **Zusammenfassung**

Raumtrenner (1) für eine Sanitärzelle (2) eines Freizeitfahrzeugs (3), insbesondere eines Wohmobils oder Wohnwagens, mit einem Rollladen (4), der vertikal orientierte - Rollladenlamellen (5) aufweist. Vorgeschlagen wird, dass der Rollladen (4) an seinem unteren Ende (6) einen Führungsabschnitt (7) aufweist und dass der Rollladen (4) an seinem Führungsabschnitt (7) mit einer reduzierten Dicke (8) der Rollladenlamellen ausgestaltet ist. Ferner wird ein Freizeitfahrzeug (3) mit solch einem Raumtrenner (1) vorgeschlagen.

## Beschreibung

Die Erfindung betrifft ein Freizeitfahrzeug mit einer Sanitärzelle, wobei ein Raumtrenner in Form eines Rollladens mit Lamellen vorgesehen ist.

Aus der DE 295 03 469 U1 ist eine kompakte Nasszelle für ein Wohnmobil bekannt. Ein Duschboden ist hierbei gegenüber dem übrigen Waschraumboden der Nasszelle vertieft angeordnet. Ferner ist der Boden des Duschbereichs durch eine Wasserauffangrinne vom Boden des Waschbereichs getrennt. Bei einer weiteren, aus diesem Stand der Technik bekannten Ausgestaltung kann der Boden des Duschbereichs auch auf gleicher Höhe mit dem Waschraumboden liegen. Die Abtrennung der Dusche erfolgt über eine Trennwand aus mehreren klappbaren Elementen, die scharnierartig miteinander verbunden sind.

Die aus der DE 295 03 469 U1 bekannte Nasszelle hat den Nachteil, dass die Wasserauffangrinne in der Nasszelle eine unerwünschte Vertiefung darstellt.

Aus der DE 295 05 479 U1 ist eine sanitäre Nasszelle für ein Wohnmobil bekannt. Hierbei kann der Raum, der für eine Dusche benötigt wird, auch für andere Zwecke, insbesondere Wohnzwecke, genutzt werden. Eine Tür ist für den Abschluss des Kabinenraums beziehungsweise der Nasszelle hierbei als halbzylindrische oder halbtonnenförmige Schale ausgeformt, die an den oberen und unteren Begrenzungsflächen im Kreismittelpunkt drehbar gelagert ist. Die Tür hat Dichtungen beziehungsweise Dichtungsprofile an beiden Seiten.

Bei der Ausgestaltung eines Raumtrenners für eine Sanitärzelle ist es denkbar, dass ein RaumRollladen den Raumabschluss bildet. Dieser kann in einer Duschwanne, die als Tiefziehteil ausgebildet sein kann, geführt sein. Für die Führung kann eine Rinne vorgesehen sein, die beispielsweise etwa 20 cm breit ausgestaltet ist, um die Führung des Rollladens zu ermöglichen.

Eine solche denkbare Ausgestaltung hat allerdings den Nachteil, dass keine bodenbündige Dusche realisiert werden kann. Außerdem eignet sich die Führung nicht zur Anordnung in einem begehbaren Bereich des Freizeitfahrzeugs, da eine Nutbreite von etwa 20 cm im Boden für Benutzer beim Betreten unangenehm ist.

Der vorliegenden Erfindung liegt die Aufgabe zugrunde, einen Raumtrenner für eine Sanitärzelle eines Freizeitfahrzeugs und ein Freizeitfahrzeug mit solch einem Raumtrenner anzugeben, die in verbesserter Weise ausgestaltet sind.

Diese Aufgabe wird durch einen Raumtrenner mit den Merkmalen des unabhängigen Patentanspruchs 1 und durch ein Freizeitfahrzeug mit den Merkmalen des Patentanspruchs 11 gelöst. Vorteilhafte Weiterbildungen der Erfindung sind in den Unteransprüchen angegeben.

Die Aufgabe wird durch einen Raumtrenner für eine Sanitärzelle eines Freizeitfahrzeugs, insbesondere eines Wohnmobils oder Wohnwagens, mit einem Rollladen, der vertikal orientierte Rollladenlamellen aufweist, gelöst, wobei der Rollladen an seinem unteren Ende einen Führungsabschnitt aufweist und wobei der Rollladen an seinem Führungsabschnitt mit einer reduzierten Dicke der Rollladenlamellen ausgestattet ist.

Außerdem wird die Aufgabe durch ein Freizeitfahrzeug, insbesondere ein Wohnmobil oder einen Wohnwagen, mit zumindest einem solchen Raumtrenner gelöst.

Vorteilhaft ist, dass die Rollladenlamellen an dem Führungsabschnitt mit einem an den Rollladenlamellen angebrachten Kunststoffstopfen geschlossen sind. Der Kunststoffstopfen ermöglicht hierbei gegebenenfalls eine flexible Verformung, um den Rollladen auch um eine Kurve zu führen.

Vorteilhaft ist es, dass die Rollladenlamellen an einer Seite, die im montierten Zustand vorzugsweise einer Dusche der Sanitärzelle zugewandt ist, mit einer durchgehenden Beschichtung, insbesondere einer Folienbeschichtung, abgedichtet ist. Dadurch kann ein zuverlässiger Spritzwasserschutzt zum Duschen geschaffen werden. Hierdurch eignet sich der Rollladen beispielsweise auch zur Abtrennung gegenüber einem Laufboden.

Vorteilhaft ist es, dass ein Boden vorgesehen ist, der eine Vertiefung aufweist, dass die Vertiefung einen Führungsspalt aufweist und dass der Rollladen an seinem unteren Ende mit dem Führungsabschnitt in den Führungsspalt geführt ist. Hierbei ist es außerdem von Vorteil, dass eine bewegbare Bodenplatte vorgesehen ist, die zumindest teilweise in der Vertiefung angeordnet ist, dass eine Kante der bewegbaren Bodenplatte den Führungsspalt begrenzt und dass in einer Duschposition der bewegbaren Bodenplatte der Führungsspalt vergrößert ist. Hierdurch kann zum Duschen ein vorteilhafter Ablauf des Duschwassers realisiert werden, indem der Führungsspalt vergrößert ist. Wenn sich die Bodenplatte nicht in der Duschposition befindet, dann kann in der Nasszelle beispielsweise ein Waschbecken oder eine Toilette genutzt werden. Da der Führungsspalt dann schmal ist, ist das Treten auf den Führungsspalt für einen Benutzer nicht so unangenehm.

In vorteilhafter Weise kann eine Oberseite der bewegbaren Bodenplatte zumindest näherungsweise auf der Höhe einer Oberseite des Bodens angeordnet sein. Bei dem Boden kann es sich hierbei um einen Laufboden handeln. Somit kann eine vorteilhafte Führung des Rollladens und zugleich eine vorteilhafte Anordnung der Bodenplatte ermöglicht werden. Insbesondere kann ein stufenloser Zugang zu der Nasszelle ermöglicht werden.

In vorteilhafter Weise ist ein mit dem Boden verbundenes Dichtprofil vorgesehen, das zumindest teilweise in der Vertiefung angeordnet ist, wobei das Dichtprofil zwischen einer durch die Vertiefung gebildeten Bodenkante des Bodens und dem Führungsabschnitt des Rollladens angeordnet ist. Hierbei ist es besonders vorteilhaft, dass das Dichtprofil zumindest eine dem Führungsabschnitt zugewandte Weichlippe aufweist. Die Weichlippe kann zur Minimierung eines Schwallwasseraustritts dienen. Die Weichlippe kann auch zur Geräuschminimierung an der Führung des Rollladens dienen. Ferner kann das Dichtprofil eine Kanteneinfassung für den Boden realisieren.

Vorteilhaft ist deshalb auch, dass das Dichtprofil zumindest einen Grundkörper aufweist, der zumindest im Wesentlichen aus einem Hartkunststoff gebildet ist und dass die Weichlippe vorzugsweise durch Koextrusion an dem Grundkörper ausgeformt ist. Hierdurch ist eine vorteilhafte Herstellung des Dichtprofils möglich.

Besonders vorteilhaft ist es, dass der Rollladen hängend geführt ist. Ein unter den hängend geführten Rollladen gelangendes Schwallwasser kann hierbei beispielsweise über die Weichlippe des Dichtprofils zurückgehalten werden.

Weitere Vorteile und Einzelheiten der Erfindung werden anhand des in der schematischen Figur dargestellten Ausführungsbeispiels näher erläutert. Hierbei zeigt:

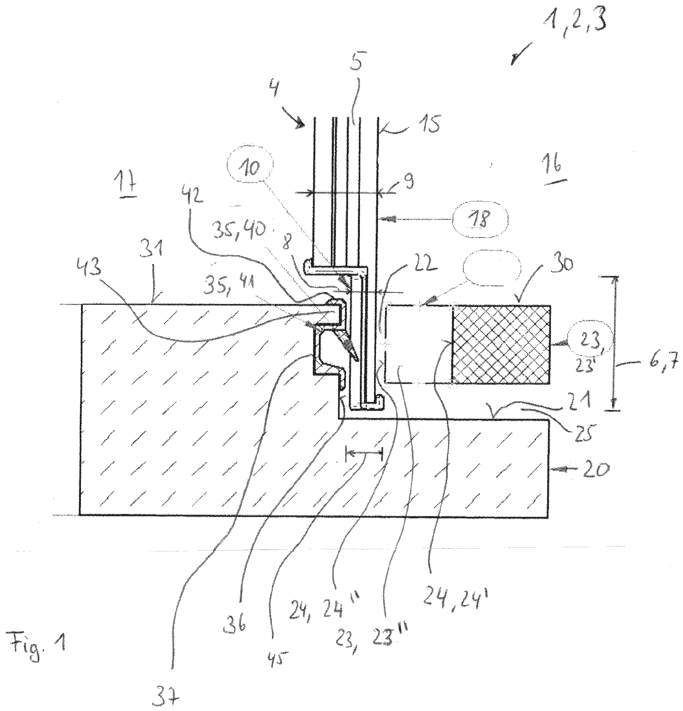

- Fig. 1: einen Raumtrenner für eine Sanitärzelle eines Freizeitfahrzeugs entsprechend einem Ausführungsbeispiel in einer auszugsweisen, schematischen Schnittdarstellung.

Fig. 1 zeigt einen Raumtrenner 1 für eine Sanitärzelle 2 eines Freizeitfahrzeugs 3 entsprechend einem Ausführungsbeispiel in einer auszugsweisen, schematischen Schnittdarstellung. Das Freizeitfahrzeug 3 kann insbesondere als Wohnmobil oder Wohnwagen ausgebildet sein.

Der Raumtrenner 1 weist einen Rollladen 4 auf, der an seinem unteren Ende 6 einen Führungsabschnitt 7 aufweist. Der Rollladen 4 ist an seinem Führungsabschnitt 7 mit einer Dicke 8 ausgestaltet, die gegenüber einer Dicke 9 des Rollladens 4 oberhalb des unteren Endes 6 reduziert ist.

Die Rollladenlamellen 5 sind an dem Führungsabschnitt 7 mit einem an den Rollladenlamellen 5 angebrachten Kunststoffstopfen 10 geschlossen. Somit ist das untere Ende 6 der Rollladenlamellen 5 mit dem Kunststoffstopfen 10 geschlossen.

Ferner sind die Rollladenlamellen 5 an einer Seite 15 des Rollladens 4, die einer Dusche 16 der Sanitärzelle 2 zugewandt ist, mit einer durchgehenden Folienbeschichtung versehen, so dass die dem Duschen zugewandte Seite 15 abgedichtet ist. Hierdurch kann insbesondere eine zuverlässige Abdichtung gegenüber einem Wohnbereich 17 erfolgen. Die Abdichtung kann aber auch gegenüber einem anderen Bereich, beispielsweise einem Toilettenbereich, realisiert sein.

In diesem Ausführungsbeispiel ist ein Boden 20 vorgesehen, bei dem es sich um den Laufboden handeln kann. Bei dem Boden 20 kann es sich auch um einen anderen Boden der Sanitärzelle 2 handeln. Der Boden 20 weist eine Vertiefung 21 auf. Hierbei ist ein Führungsspalt 22 in der Vertiefung 21 vorgesehen, in dem der Rollladen 4 mit seinem Führungsabschnitt 7 geführt ist.

In diesem Ausführungsbeispiel ist der Führungsspalt 22 in seiner Größe variabel. Die Sanitärzelle 2 weist eine bewegbare Bodenplatte 23 auf, die in der Vertiefung 21 angeordnet ist. Eine Kante 24 der bewegbaren Bodenplatte 23 begrenzt hierbei den Führungsspalt 22. Zur Veranschaulichung sind hierbei Positionen 23`, 23" der Bodenplatte 23 und entsprechende Positionen 24`, 24" der Kante 24 veranschaulicht. In der Position 23` kann eine Duschposition der bewegbaren Bodenplatte 23 gegeben sein, in der sich die Kante 24 in der Position 24` befindet, so dass ein großer Führungsspalt 22 besteht. Somit kann Duschwasser in einen Abfluss 25 unter der Bodenplatte 23 abfließen.

In der Position 23" befindet sich die Kante 24 in der Position 24", so dass der Führungsspalt 22 eng ist. Dann besteht nur ein geringer Abstand zwischen der bewegbaren Bodenplatte 23 und dem Boden 20, so dass beim Betreten der Führungsspalt 22 nur so klein ist, dass dies für den Benutzer nicht unangenehm ist. Außerdem ist die Oberseite 30 der bewegbaren Bodenplatte 23 näherungsweise auf der gleichen Höhe wie die Oberseite 31 des Bodens 20 angeordnet, so dass ein stufenloser Übergang ermöglicht wird. Außerdem ist ein mit dem Boden 20 verbundenes Dichtprofil 35 vorgesehen. Das Dichtprofil 35 ist teilweise in der Vertiefung 21 angeordnet. Hierbei befindet sich das Dichtprofil 35 an der Bodenkante 36 des Bodens 20. Beispielsweise kann hierbei an der Bodenkante 36 eine Nut 37 ausgestaltet sein, in die das Dichtprofil 35 eingesetzt ist. Dadurch ist eine zuverlässige Befestigung des Dichtprofils 35 an dem Boden 20 möglich.

Das Dichtprofil 35 ist zwischen der Bodenkante 36 und dem Führungsabschnitt 7 des Rollladens 4 angeordnet. Da der Rollladen 4 hängend geführt ist, kann Schwallwasser den Rollladen 4 etwas unterspülen. Solches Schwallwasser kann durch eine dem Führungsabschnitt 7 zugewandte Weichlippe 40 des Dichtprofils 35 zurückgehalten werden. Das Dichtprofil 35 weist außerdem vorzugsweise einen aus Hartkunststoff gebildeten Grundkörper 41 auf, so dass eine zuverlässige Befestigung und eine robuste Ausgestaltung gewährleistet sind. Die Ausgestaltung des Grundkörpers 41 kann durch Koextrusion erfolgen.

Somit kann im Boden 20 des Freizeitfahrzeugs 3 die Vertiefung 21 zur Aufnahme und zur zielgerichteten Ableitung von Duschwasser realisiert werden. Der Raum 16 zum Duschen ist durch den Rollladen 4 zuverlässig vom restlichen Raum 17 abtrennbar.

Durch die reduzierte Dicke 10 des Rollladens 4 an seinem unteren Ende 6 ist sowohl eine zuverlässige Führung als auch eine kleine Realisierung des Führungsspalts 22 möglich.

Durch den Kunststoffstopfen 10 ist ein Profilabschluss für die Rollladenlamellen 5 realisiert. Ferner führt der Kunststoffstopfen 10 den Rollladen 4 im Boden 20. Die Führung des Rollladens 4 erfolgt auch über das Dichtprofil 35. Hierbei ist durch die Ausgestaltung des Grundkörpers 41 aus Hartkunststoff eine robuste Ausgestaltung möglich. Das Dichtprofil 35 realisiert hierbei auch eine Kanteneinfassung 42 für eine Kante 43 des Bodens 20.

In diesem Ausführungsbeispiel ist die Bodenplatte 23 als bewegbare Bodenplatte 23 ausgeführt. Bei einer angewandelten Ausgestaltung kann die Bodenplatte 23 auch fest positioniert sein, wobei die Kante 24 dann in der Position 24" entsprechend der Position 23" der Bodenplatte 23 angeordnet ist. Sowohl die bewegbare Bodenplatte als auch die feste Bodenplatte 23 können herausnehmbar sein.

Somit kann innerhalb und außerhalb der Dusche 16 das gleiche Bodenniveau realisiert werden. Dadurch werden Stolperfallen für Benutzer vermieden. Speziell bei einer bewegbaren beziehungsweise verschiebbaren Bodenplatte 23 kann im Ruhezustand, also wenn die Dusche 16 nicht benutzt wird, nur eine sehr schmale Rille zwischen dem Boden 20 und der Bodenplatte 23 verbleiben, so dass sich ein angenehmes Laufgefühl für den Benutzer ergibt. Speziell kann eine Breite 45 des Führungsabschnitts 7 dann kleiner als etwa 8 mm sein.

Die Erfindung ist nicht auf die beschriebenen Ausführungsformen beschränkt.

## Patentansprüche

1. Raumtrenner (1) für eine Sanitärzelle (2) eines Freizeitfahrzeugs (3), insbesondere eine Wohnmobils oder Wohnwagens, mit einem Rollladen (4), der vertikal orientierte Rollladenlamellen (5) aufweist,
**dadurch gekennzeichnet,**
**dass** der Rollladen (4) an seinem unteren Ende (6) einen Führungsabschnitt (7) aufweist und dass der Rollladen (4) an seinem Führungsabschnitt (7) mit einer reduzierten Dicke (8) der Rollladenlamellen (5) ausgestaltet ist.

2. Raumtrenner nach Anspruch 1,
**dadurch gekennzeichnet,**
die Rollladenlamellen (5) an dem Führungsabschnitt (7) mit einem an den Rollladenlamellen (5) angebrachten Kunststoffstopfen (10) geschlossen sind.

3. Raumtrenner nach Anspruch 1 oder 2,
**dadurch gekennzeichnet,**
**dass** die Rollladenlamellen (5) an einer Seite (15), die im montierten Zustand vorzugsweise einer Dusche (16) einer Sanitärzelle (2) zugewandt ist, mit einer durchgehenden Beschichtung (18), insbesondere einer Folienbeschichtung, abgedichtet ist.

4. Raumtrenner nach einem der Ansprüche 1 bis 3,
**dadurch gekennzeichnet,**
**dass** ein Boden (20) vorgesehen ist, der eine Vertiefung (21) aufweist, dass die Vertiefung (21) einen Führungsspalt (22) aufweist und dass der Rollladen (4) an seinem unteren Ende (6) mit dem Führungsabschnitt (7) in dem Führungsspalt (22) geführt ist.

5. Raumtrenner nach Anspruch 4,
**dadurch gekennzeichnet,**
**dass** eine bewegbare Bodenplatte (23) vorgesehen ist, die zumindest teilweise in der Vertiefung (21) angeordnet ist, dass eine Kante (24) der bewegbaren Bodenplatte (23) den Führungsspalt (22) begrenzt und dass in einer Duschposition (23`) der bewegbaren Bodenplatte (23) der Führungsspalt (22) vergrößert ist.

6. Raumtrenner nach Anspruch 5,
**dadurch gekennzeichnet,**
**dass** eine Oberseite (30) der bewegbaren Bodenplatte (23) zumindest näherungsweise auf der Höhe einer Oberseite (31) des Bodens (20) angeordnet ist.

7. Raumtrenner nach einem der Ansprüche 4 bis 6,
**dadurch gekennzeichnet,**
**dass** ein mit dem Boden (20) verbundenes Dichtprofil (35) vorgesehen ist, das zumindest teilweise in der Vertiefung (21) angeordnet ist, wobei das Dichtprofil (35) zwischen einer durch die Vertiefung (21) gebildeten Bodenkante (36) des Bodens (20) und dem Führungsabschnitt (7) des Rollladens (4) angeordnet ist.

8. Raumtrenner nach Anspruch 7,
**dadurch gekennzeichnet,**
**dass** das Dichtprofil (35) zumindest eine dem Führungsabschnitt (7) zugewandte Weichlippe (40) aufweist.

9. Raumtrenner nach Anspruch 8,
**dadurch gekennzeichnet,**
**dass** das Dichtprofil (35) zumindest einen Grundkörper (41) aufweist, der zumindest im Wesentlichen aus einem Hartkunststoff gebildet ist, und dass die Weichlippe (40) vorzugsweise durch Koextrusion an dem Grundkörper (41) ausgeformt ist.

10. Raumtrenner nach einem der Ansprüche 1 bis 9,
**dadurch gekennzeichnet,**
**dass** der Rollladen (4) hängend geführt ist.

11. Freizeitfahrzeug (3), insbesondere Wohnmobil oder Wohnwagen mit zumindest einem Raumtrenner (1) nach einem der Ansprüche 1 bis 10.
